# EUROPEAN PATENT APPLICATION

(11) **EP 0 942 576 A2**
(43) Date of publication of application: **15.09.1999**
(21) Application number: 99301692.2
(22) Date of filing: 05.03.1999
(51) Int. Cl.: H04M 7/00, H04M 3/50

(54) **Method and apparatus for facilitating access to the internet from a telephone network**

(30) Priority: 11.03.1998 US 38528
(71) Applicant: AT&T Corp., New York, NY 10013-2412 (US)
(72) Inventor: Ehlinger, James, Colts Neck, New Jersey 07722 (US)
(74) Representative: Asquith, Julian Peter

(57) **Abstract**

A subscriber of a public switched telecommunications network may gain direct access his/her voice station set (12) to the Internet (14) by first accessing a special platform (16) in the telephone network. The special platform (16) serves to validate the subscriber, and upon validation, converts a entered address label, entered by the subscriber via DTMF or voice, into a corresponding TCP/IP address for a site on the Internet. After launching the address to gain access to the site, the special platform converts orders entered by the subscriber via DTMF or voice into TCP/IP text commands, and converts TCP/IP commands received from the site into voice for transmission to the subscriber.

## Description

### Technical Field

This invention relates to a technique for enabling a subscriber of a telecommunication network to gain ready access to the Internet, or another network of computers, directly from the telecommunications network.

### Background Art

For many individuals, the Internet is an indispensable communications medium. Using the Internet, an individual can connect with thousands of separate sites that offer information, goods and/or services. Not only can an individual use the Internet to obtain information or to purchase products and/or services, the Internet can carry communications, in the form of electronic mail, between and among individuals anywhere in the world virtually instantaneously.

Presently, efforts are underway to utilize the Internet to carry voice telephony between multi-media terminals (e.g., personal computers) as well as between a multi-media terminal and a conventional voice terminal, such as a telephone set. Internet telephony remains in its infancy. Thus, conventional providers of telephony service, such as AT&T, continue to carry the bulk of present day voice telephony over their networks.

To connect to the public switched telephone network, a subscriber goes off-hook on his or her voice station set. Once off hook, the subscriber hears a dial tone and then places a telephone call to called party by dialing that party's number. An individual seeking access to the Internet typically gains such access by connecting through a computer or terminal that employs the well-known TCP/IP protocol. An Internet user obtains a connection through an end-to-end data link, a local or wide area network connection, or may gain a connection through a dial up-modem to an Internet Service Provider, such as AT&T Worldnet Service.

Presently, an individual seeking access to the Internet via his or her conventional voice station set is unable to do so because of a lack of compatibility between the protocol associated with placing a conventional telephone call and the TCP/IP protocol needed to access the Internet. In other words, a telephone subscriber presently cannot simply dial a telephone number from his or her station set and become directly connected to the Internet. Thus, a telephone subscriber lacking ready access to a computer or terminal cannot obtain electronic mail messages that may be awaiting that subscriber on his/her Internet mail server.

There is a need for technique for enabling a telephone subscriber to gain access to the Internet directly from a telephone station set.

### Brief Summary of the Invention

Briefly, the invention provides a method for enabling a telecommunications subscriber of a public switched telecommunications network to gain access to the Internet directly from the subscriber's voice station set. To gain such access, the subscriber dials an access number, typically, although not necessarily, a toll free (i.e., 800 or 888) number. Upon dialing the access number, the subscriber reaches a special call processing platform within the public switched telecommunications network that stores subscriber information including a validating identifier. In response to an incoming call, the platform identifies and validates the subscriber by accessing the subscriber's record in a subscriber database and matching the subscriber's validating identifier to a corresponding validating identifier stored in the subscriber's corresponding database record. The subscriber's identifier may comprise the subscriber's originating number (as obtained via Automatic Number Identification (ANI) or a Personal Identification Number (PIN) entered in response to a prompt by the platform. Upon validation, the platform establishes a communications link, typically having a TCP/IP protocol, with, a web server linked to the Internet. To access a particular site, the subscriber enters a command (either voice or DTMF) which the platform translates into a corresponding web site address for communications to the web server. In response to the command, the web server links to the address. Thereafter, the subscriber interacts with the selected web site by entering commands that are translated by the platform into corresponding text interpreted by the web server. Conversely, information from the web server, destined for the subscriber, is converted into speech by the platform for receipt by the subscriber. In this way, a subscriber can directly access the Internet from a voice station set, allowing the subscriber to access electronic mail and/or other services via the Internet. Alternatively, a telecommunications subscriber can make a connection to a proprietary network in the same fashion, provided a link exists between the public switched telecommunications network and a server on the proprietary network.

In accordance with another aspect of the invention, a telephone subscriber seeking personalized call handling may establish an Internet site containing information, typically in the form of a database, specifying such desired personalized call handling. To access the Internet site containing such personalized call handling information, the subscriber obtains access to the Internet in the previously described manner. Following access to the Internet via the web server, the subscriber enters a command, (either voice or DTMF) to access the site containing the personalized call handing information. Upon accessing the site containing the personalized call handling treatment, the platform transfers call control to the Internet site to allow call processing in accordance with the information stored at the site by the subscriber.

### Brief Summary of the Drawings

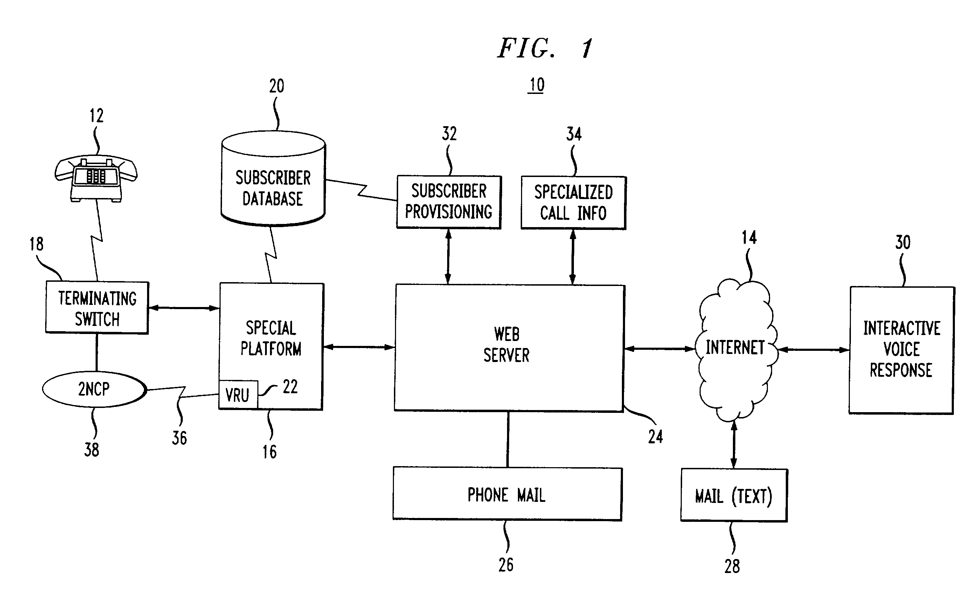

FIGURE 1 shows a block schematic diagram of a telecommunications network in accordance with the invention for facilitating access from a voice station set to the Internet.

### Detailed Description

FIGURE 1 depicts a block schematic diagram of a system 10, in accordance with the present invention, for enabling a telephone subscriber to gain access, via his/her voice telephone set 12, to the Internet 14, or a similar packet-based network. The system 10 includes a speciaL purpose platform 16 for receiving a voice call from the subscriber's station set 12 and for performing the appropriate protocol conversion, as described hereinafter, to facilitate communication between the subscriber and the Internet 14. The special purpose platform 16 includes a switch or the like (not shown), that receives a call originating from the subscriber's station set 12 via a terminating switch 18 that may comprise a toll switch within a Inter-Exchange Carrier network (not shown) such as the network maintained by AT&T. Alternatively, the switch 18 may comprise a terminating switch in a Local Exchange Carrier Network. Indeed, the switch 18 could act as an originating and terminating switch for the subscriber, depending on the configuration of the telecommunications network that carried the subscriber's call.

In addition to the switch, the special platform 16 typically includes means for decoding and encoding voice signals (not shown), as well as a packet processor for building and extracting (i.e., packing and unpacking) packets for transmission to, and receipt from, the Internet 14. Other elements of the platform 16 include an echo canceller, a telephone signaling interface and a control processor for managing the platform. In practice, the platform 16 may include the elements of the Internet-Sawy (IS) platform disclosed in U.S. Patent Application, 08/494,610, "Method and Apparatus for Establishing Voice Connections Over Internet-like Networks," filed on July 23, 1995, in the name of Daniel J. Mayer, and assigned to AT&T (herein incorporated by reference.)

The special platform 16 is linked, typically via a signaling system 18, such as AT&T's SS7 signaling system, to a database 20 containing about each subscriber that has subscribed to the Internet access service provided by the platform 16. In particular, the database 20 includes a record for each subscriber, including that subscriber's identifier for validating access to permit only authorized individuals to receive service. The subscriber identifier may comprise the telephone number of the subscriber's station set 12, as provided to the terminating switch 18 via Automatic Number Identification (ANI). Thus, upon receipt of the subscriber's call, as received from the switch 18, along with the subscriber's telephone number, the special platform 16 launches a query to the subscriber database 20 to determine whether the subscriber's telephone number received from the switch 18 matches the associated with the subscriber. A match between the subscriber's telephone number and the phone number associated with the subscriber's database record entitles the subscriber to access.

Instead of employing the subscriber's telephone number as the identifier, the subscriber could be assigned a unique Personal Identification Number (PIN), the same as, or different from, the telephone number. Upon receipt of a call from the subscriber, a Voice Response Unit (VRU) 22 within the special platform 16 prompts the subscriber to enter his/her PIN, by directing the subscriber to speak or dial the corresponding digits. After the subscriber enters his/her PIN, the special platform 16 launches a query to the subscriber database 20 to match the entered PIN to the PIN associated with the subscriber.

Subscriber validation via ANI, or via entry of a PIN, are not necessarily mutually exclusive. For example, subscriber validation could entail matching of both the subscriber's telephone number and PIN. Should the subscriber call from a pay phone, for example, the platform 16 would validate the subscriber following entry by the subscriber of his/her phone number and PIN.

After validation, the platform 16 prompts the subscriber to enter the desired Internet address, by asking the subscriber to speak or dial the sequence of digits corresponding to the address. In practice, the subscriber need only respond by entering a spoken command or DTMF sequence representing a label, or shorthand description, representing the desired address. The platform 16 matches the subscriber-entered label to a corresponding address in the subscriber's record in the database 20. Each subscriber record typically contains at least one Internet address, and typically will include a plurality of addresses, each typically identified by a separate label.

Once the platform 16 matches the subscriber-entered label to a corresponding address, the platform then translates the label into a corresponding address having a TCP/IP protocol for transmission to a web server 24. If the destination specified by the address is the web server 24 itself, then the web-server responds directly to the platform 16. For example the address received by the web server 24 from the platform may correspond to a particular mailbox in a phone mail system 26 linked to the server for storing Internet Telephony messages. Thus, upon receipt of the address from the platform 16, the web server 24 launches a query to its associated phone mail system 26 to access the mailbox corresponding to the address. The phone mail system 26 returns the contents of the corresponding mailbox to the web server 24, which in turn passes the mailbox contents to the special platform 16. Upon receipt of the mailbox contents, the special platform 16 converts the mailbox contents into speech for receipt by the subscriber.

Alternatively, the address received at the web server 24 from the special platform 16 may correspond to a site other than the web server itself. For example, the address received at the web server 24 from the platform 16 could correspond to a mailbox in a text mail system 28 linked to another web server (not shown). Under such circumstances, the web server 24 launches the address onto the Internet 14 for routing to the text mail system 28. In response, the text mail system 28 transmits the contents of the mailbox corresponding to the address back to the web server 24 for transmission to the special platform 16. The special platform 16 converts the mailbox contents into speech for receipt by the subscriber.

Alternatively, the address received by web server 24 may correspond to that of an Interactive Voice Response (IVR) System 30. After establishing a connection with the IVR system 30, the web server 24 passes subscriber commands, converted by the platform 16 from DTMF or speech, into an address having a TCP/IP protocol for transmission to the IVR system 30 via the Internet 14. Information generated by the IVR system 30 in response to the subscriber commands passes via the Internet 14 to the web server 24 for receipt by the special platform 16 which converts such information into speech for receipt by the subscriber.

Ordinarily, the telecommunications service provider responsible for maintaining special platform 16 enters the subscriber records stored in the database 20 from information received from the subscriber, including the validating identifier and desired label for each corresponding Internet addresses. In accordance with an aspect of this invention, a subscriber of the above-described Internet access method, may choose to send information for initial transmission to the database 20 and for subsequent transmission therefrom to the subscriber provisioning database 32 linked to the web server 24. As indicated by the arrow between them, the subscriber provisioning database 32 can receive information from the subscriber database 20 to update the subscriber records stored in the provisioning database.

In accordance with another aspect of this invention, a subscriber seeking specialized call treatment can create a specialized call information Internet web site 34 associated with the web server 24 (or another server). The web site 24 contains information, typically in the form of a database, specifying the desired treatment for incoming and/or outgoing calls. For example, a subscriber may want toll-free treatment for selected incoming calls, such as call from family members or certain customers. However, for other callers, the subscriber does not want to absorb the charges. To obtain such specialized call treatment, the subscriber provides instructions for storage at the subscriber's specialized call information web site 34. After storing the information at the web site 34, the subscriber seeking call treatment in accordance with the information stored at the web site initiates a call to the special platform 16. The subscriber then enters an instruction, via either a spoken command or DMTF digit sequence, to initiate specialized call treatment in accordance with the stored information at the web site 34. In response to such an instruction, the specialized platform 16 launches an alert, typically via a signaling link 36, such as an AT&T SS7 link, to a database 38, such as a 2NCP database, that normally provides call processing information for the subscriber. The alert advises that database 38 that rather than rely on its own stored information for determining what if any specialized call treatment should be afforded to the subscriber's call, all inquiries for information for call handing information must now go to the web site 34. In other words, the telecommunications network (represented in part by the terminating switch 18 and the database 38) handling the subscriber's call would, in accordance with the invention, rely on the web site 34 for call handling. Previously, call handling has strictly been the province of the telecommunications network. However, the present invention allows an individual subscriber, via his/her web site to effect personalized call control.

The foregoing describes a technique for enabling a telecommunications subscriber to gain direct access to the Internet through a special platform that performs the necessary protocol conversion. The same platform also enables the subscriber to accomplish specialized call treatment in accordance with information stored on an Internet Web Site 34.

It is to be understood that the above-described embodiments are merely illustrative of the principles of the invention. Various modifications and changes may be made thereto by those skilled in the art that will embody the principles of the invention and fall within the spirit and scope thereof.

## Claims

1. A method for enabling a subscriber of a subscriber of a switched public telecommunications network to gain access to a network of interconnected computers, comprising the steps of:
accessing a special platform in the telecommunications network;
validating the subscriber by matching a identifier associated with the subscriber to a corresponding identifier in one of a plurality of records in a subscriber database;
following validation, receiving from the subscriber a label identifying a desired address within the network of interconnected computers to be accessed;
launching, from the special platform, the desired address to the network of interconnected computers to establish a link to a site in said network of interconnected computers corresponding to said desired address;
receiving at least one command from the subscriber destined for said site and converting said command into an order of appropriate protocol for transmission to said site; and
receiving information from said site and converting said information into speech for receipt by the subscriber.

2. The method according to claim 1 wherein the subscriber accesses said special platform in said telecommunications network by dialing a toll-free number.

3. The method according to claim 1 wherein the special identifier comprises the subscriber's telephone number and wherein the validating step comprises the step of matching the subscriber's telephone number to a corresponding telephone number said one of said plurality of database records.

4. The method according to claim 1 wherein the subscriber identifier comprises a Personal Identification Number (PIN) and wherein said validating step comprises the steps of:
prompting the subscriber to enter his/her PIN; and
matching the subscriber-entered PIN to a PIN in one of said plurality of subscriber database records.

5. The method according to claim 1 wherein said step of receiving said label includes the steps of:
receiving a sequence of DTMF digits entered by the subscriber; and
converting the string of DTMF digits into an address of an appropriate protocol for transmission to the network of interconnected computers.

6. The method according to claim 1 wherein said step of receiving said label includes the steps of:
receiving a spoken utterance entered by the subscriber; and
converting the spoken utterance into an address of an appropriate protocol for transmission to the network of interconnected computers.

7. The method according to claim 1 wherein the step of receiving and converting said command from said subscriber includes the steps of :
receiving a spoken utterance entered by the subscriber; and
converting the spoken utterance into said order of the appropriate protocol for transmission to the network of interconnected computers.

8. The method according to claim 1 wherein the step of receiving and converting said command from said subscriber includes the steps of :
receiving a sequence of DTMF signals entered by the subscriber; and
converting the sequence of DTMF signals into said order of the appropriate protocol for transmission to the network of interconnected computers.

9. The method according to claim 5 wherein the address has a TCP/IP protocol.

10. The method according to claim 6 wherein the address has a TCP/IP protocol.

11. The method according to claim 7 wherein the order has a TCP/IP protocol.

12. The method according to claim 8 wherein the order has a TCP/IP protocol.

13. Apparatus for enabling a subscriber of a subscriber of a switched public telecommunications network to gain access to a network of interconnected computers, comprising the steps of:
a special platform within the telecommunications network accessible to the subscriber for validating the subscriber for access, and upon access, receiving a subscriber address and converting the address label into an address of an appropriate protocol for transmission to the network of interconnected computers; and
a gate way for connecting the special platform to the network of interconnected computers.

14. The apparatus according to claim 13 wherein the network of interconnected computers comprises the Internet.

15. The apparatus according to claim 13 wherein the special platform includes a Voice Response Unit (VRU) for prompting the subscriber to enter a validating Personal Identification Number (PIN).

16. A method for enabling a subscriber of a subscriber of a switched public telecommunications network to establish personalized call treatment; comprising the steps of:
alerting a special platform in a telecommunications network of the existence of a site on a network of interconnected computers that contains information directing the telecommunications network how to process calls to which the subscriber is a party; and
alerting a database within the network that ordinarily contains call processing information for directing the processing of calls to which the subscriber is a party to access the site on the network of interconnected computers for call handing information;
receiving in the public switched telecommunications network a call to which the subscriber is a party; and
accessing the site on the network of interconnected computers to determine how to process the call.

17. The method according to claim 16 wherein the special platform is alerted via a sequence of DTMF digits.

18. The method according to claim 16 wherein the special platform is alerted via a spoken utterance entered by the subscriber.

19. The method according to claim 16 wherein the special platform alerts the database via a signaling command transmitted via a signaling link.
